# EUROPEAN PATENT APPLICATION

(11) **EP 2 362 129 A2**
(43) Date of publication of application: **31.08.2011**
(21) Application number: 11155818.5
(22) Date of filing: 24.02.2011
(51) Int. Cl.: F16L 21/06

(54) **Lock fitting for a spigot-and-socket joint**

(30) Priority: 26.02.2010 DK 201070075
(71) Applicant: Blücher Metal A/S, 7480 Vildbjerg (DK)
(72) Inventor: Lohmann, Hans, 4180, Sorø (DK)
(74) Representative: Nielsen, Leif

(57) **Abstract**

There is disclosed a lock fitting (1) for securing a spigot-and-socket joint between a first and a second thin-walled metal pipe (3,4). The lock fitting (1) includes a first (5) and a second bracket (6). The first bracket (5) includes a first leg (10) and a second leg (11) and a first locking means (7). The second bracket includes a third leg (12) and a fourth leg (13) and a second locking means (7) for joining to the first locking means. When the two brackets have been joined, the first and third legs (10,12) interact and form a first circular recess for receiving a spigot end (3) of a pipe. When the two brackets have been joined, the second and fourth legs (11,13) interact and form a second and greater circular recess for receiving a socket end (4) of a pipe. At least one leg includes at least one tooth (14) which is directed inwardly into one of the circular recesses for pressing into the spigot end (3) of the metal pipe when the brackets are joined. Hereby, good squeezing force is achieved combined with mechanical engagement with the lock fitting.

## Description

### Field of the Invention

The present invention concerns a lock fitting for securing a joint between a first and a second thin-walled metal pipe, where the lock fitting includes a first bracket and a second bracket, where the first bracket includes a first leg and a second leg and a first locking means, where the second bracket includes a third leg and a fourth leg and a second locking means for joining to the first locking means, where the legs, when the two brackets have been joined, form a first and a second recess for receiving pipe ends, and where at least one leg includes at least one tooth which is directed inwardly into at least one of the circular recesses.

The present invention further concerns a method for securing a joint between a first and a second thin-walled metal pipe, where the lock fitting is inserted around the spigot-and-socket joint, where the first bracket of the lock fitting is joined to the second bracket of the lock fitting by joining a first locking means on the first bracket and a second locking means on the second bracket, where the first bracket includes a first leg and a second leg, where the second bracket includes a third leg and a fourth leg, where the legs, when the two brackets are joined, form a first and a second recess for receiving pipe ends, and where at least one leg includes at least one tooth which is directed inwardly into at least one of the circular recesses.

The invention furthermore concerns use of the lock fitting.

### Background of the Invention

Spigot-and-socket joints are often used in joining fluid conducting pipes in pipelines. By such spigot-and-socket joints, one pipe has a spigot end and the other pipe a socket end, where the spigot end has smaller diameter than the socket end. The pipe with the spigot end is inserted into the socket end and a joint is formed thereby. Typically, the socket end is equipped with sealing means, typically in the form of a packing groove at the outer side of the socket end of the pipe. The fluid is usually liquid, but the present invention also finds application to pipes for gaseous fluids.

During use of the pipelines it is not unusual that in some places so-called surges occur in the pipelines. These surges may easily cause a pressure in the joints of up to several bars. This pressure will often influence the joint such that there is a risk of the pipes being pulled apart. Therefore, it is required that the joints are secured.

From WO 2009/053603 is known a lock fitting for pipe joints. The fitting includes a first and a second bracket part surrounding the pipe joint. The two bracket parts of the fitting may be screwed together. A leg is provided perpendicularly to the ends of each bracket part. At each leg there is mounted a separate gripping segment which at its outer end is terminated by a sine-shaped surface. When the fitting encloses a pipe joint, the end face of the gripping segments will be pressed against the surface of the pipe joint, counteracting actions of force in parallel with the longitudinal axis of the pipeline that may separate the joint.

One of the drawbacks of the fitting of WO 2009/053603 is that it is formed of several separate elements. Another drawback is that the fitting is only brought into engagement with the pipe joint at the peaks of the sine-shaped end face, thus reducing the contact surface between the surface of the pipe joint and the fitting, and thereby giving rise to reduced frictional engagement. Furthermore, each bracket segment is designed such that it fits closely around the pipe. Thus it cannot be used if the pipe joint is provided with outwardly directed sealing means, e.g. packing grooves, relative to the diameter of the pipe joint. Furthermore, the end faces of the bracket segments will not grip uniformly on pipe ends if there is a difference in diameter of two joined pipes as is the case with spigot-and-socket joints.

Moreover, from JP 7190261 A is known a lock fitting of the type mentioned in the introduction. This lock fitting is made of two bracket segments with a groove for accommodating a packing which is disposed opposite two pipe ends. Surfaces (legs) at each side of the groove form circular recesses for receiving pipe ends with identical diameter. On the faces there are projections that interact with holes in the pipes for axial retention of the two pipes. Moreover, each bracket segment is designed so as to fit tightly around the pipe. Thus it cannot be used if the pipe joint is provided with outwardly directed sealing means, e.g. packing grooves, relative to the diameter of the pipe joint. Furthermore, the end faces of the bracket segments will not grip uniformly on pipe ends if there is a difference in diameter between two joined pipes as is the case by spigot-and-socket joints.

### Object of the Invention

To indicate a lock fitting and a method which can secure spigot-and-socket joints under surges, which is simple to produce and which minimises or completely overcomes the drawbacks of the prior art bracket clamps.

### Description of the Invention

According to the present invention, this is achieved by a lock fitting of the type specified in the introduction which is peculiar in that the first and third legs interact and form a first circular recess for receiving a spigot end of a pipe, that the second and fourth legs interact and form a second and greater circular recess for receiving a socket end of a pipe, and that the at least one tooth is directed inwardly into the first circular recess for pressing into the spigot end of the metal pipe when the brackets are joined.

The method according to the invention is peculiar in that the first and third legs form a first circular recess for receiving a spigot end of a pipe, that the second and fourth legs form a second and larger circular recess for receiving a socket end of a pipe, and that the at least one tooth which is directed inwardly into the first circular recess is pressed into the spigot end of the metal pipe during the joining of the two brackets.

By a thin-walled metal pipe is meant a metal pipe with a thickness large enough to let the pipe be compressed without being damaged, and at the same time thin enough to enable such pressing when the lock fitting is tightened by hand. The metal pipes will typically have a thickness between 0.3 and 3.0 mm.

By a spigot-and-socket joint is meant a joint between two pipes having a spigot end which is mounted in a socket end.

The pipes with which lock fittings are used will normally have a circular cross-section. If pipes which are not quite circular are used, the recesses will be formed with a cross-section corresponding to the cross-section of the pipes.

The lock fitting includes a first and a second bracket, where each bracket has two legs. The first bracket has a first and a second leg formed integrally with a jointing member connecting the two legs, and the second bracket has a third and a fourth leg formed integrally with a jointing member connecting the two legs. The two brackets each include a locking means. The locking means may e.g. be in the form of one or more screw holes such that the brackets can be screwed together with one or more screws.

It is preferred that at least opposite the socket end, the two jointing members connecting the two legs in each bracket part are provided spaced apart from the outer surface of the socket end so that there is space for a protruding packing groove at the socket end.

The first and third legs of the brackets are designed such that when the brackets are joined, they form a circular recess corresponding to the spigot end of a metal pipe such that a circular contact surface appears between the spigot end of the pipe and the inner surface of the recess. Also, the second and fourth legs of the brackets are designed such that when the brackets are joined, they form a recess corresponding to the socket end of a metal pipe such that a circular contact surface appears between the socket end of the pipe and the inner surface of the recess.

Moreover, at least one of the legs includes an inwardly directed tooth, i.e. the tooth is preferably at right angles to the extent of the pipe. The at least one tooth is disposed at the inner surface of the previously mentioned recess corresponding to the spigot end of the pipe such that the least one tooth engages the pipe and makes an impression therein. The at least one tooth is of such size that the impression does not weaken the structure of the pipe.

Depending on the pipe diameter, the number and the mutual disposition of the teeth may be varied. A pipe with very large diameter may require more impressions than a pipe with a very small diameter.

Hereby is achieved that after joining, the lock fitting retains the spigot-and-socket joint in a way where not only a good clamping force/friction is achieved by the engagement between the surfaces of the socket end/spigot end and the interacting recess, but a mechanical engagement as well, thereby ensuring that the pipes are not pulled apart by surges or other actions of force.

According to a further embodiment, the invention is peculiar in that the two pairs of interacting legs are spaced apart and that at least one pair of interacting legs have a lateral surface facing the other pair of interacting legs, and which is adapted for bearing against an outwardly protruding bead, for example in the form of a packing groove, on the pipe.

Hereby is achieved that the lock fitting further holds the joint fast as the lock fitting bears against the projecting bead. This ensures that there is even less risk of the pipes being pulled apart by surges.

According to a further embodiment, the invention is peculiar in that the first leg and the third leg include at least one tooth adapted for pressing into the spigot end of the pipe.

In that the teeth are adapted for pressing into the pipe spigot end, it is achieved that the lock fitting is easier to mount. This is due to the fact that the two pipes overlap at the socket end, and therefore it is more difficult to make an impression therein. In that both the first and the third legs include teeth it is achieved that the force imparted to the lock fitting during a surge will be distributed between the first and the second brackets.

According to a further embodiment, the invention is peculiar in that the second leg and the fourth leg have a lateral surface which is adapted for bearing against an outwardly protruding bead on the pipe.

In a very suitable embodiment, the invention is peculiar in that both the first and the third legs include a tooth while simultaneously the second and the fourth leg form a contact surface for a protruding bead.

Hereby is achieved that the lock fitting retains the pipe at both sides of the joint. At one side of the joint, the lock fitting is pressed into the pipe, and at the other side the lock fitting is pressed against a projecting bead, as e.g. a packing groove. The joint is hereby secured effectively.

According to a further embodiment, the invention is peculiar in that the first bracket and the second bracket are pivotably interconnected via a hinge connection.

Hereby is achieved that mounting of the lock fitting becomes easier. Furthermore, it is achieved that the first and the second brackets are held together, making it easy to store and transport the lock fitting.

According to a further embodiment, the invention is peculiar in that one or the other bracket includes a hole.

As pipelines typically extend both in horizontal and vertical directions, it is often necessary to fix the pipes to a surface. By providing a hole in one of the brackets, the fitting may, apart from acting as a lock fitting, at the same time facilitate fixation of the pipe to a surface. The hole may possibly be provided with internal screw thread such that a spacer member, e.g. in the form of threaded rod, can be mounted on the lock fitting.

By the method is achieved that part of the lock fitting is pressed into the metal pipe. This impression provides that the lock fitting is retained, thereby holding the joint together such that it cannot be pulled apart.

According to a further embodiment, the invention is peculiar in that the second and fourth legs are disposed with a lateral surface facing the first and third legs in contact with an outwardly projecting bead on the pipe, for example formed by a packing groove, during joining.

Hereby is achieved that the lock fitting is secured bearing against a bead on the pipe. This entails that the grip of the lock fitting in the pipe is improved and the joint is thus better secured.

### Description of the Drawing

The invention is described in the following with reference to the drawing, wherein:
Fig. 1 shows the lock fitting;
Fig. 2 shows the lock fitting as seen from the spigot end of the pipe;
Fig. 3 shows the lock fitting as seen from the side of the pipe; and
Fig. 4 shows the lock fitting as seen from below towards the spigot end of the pipe.

In the explanation of the Figures, identical or corresponding elements will be provided with the same designations in different Figures. Therefore, no explanation of all details will be given in connection with each single Figure/embodiment.

### Detailed Description of Embodiments of the Invention

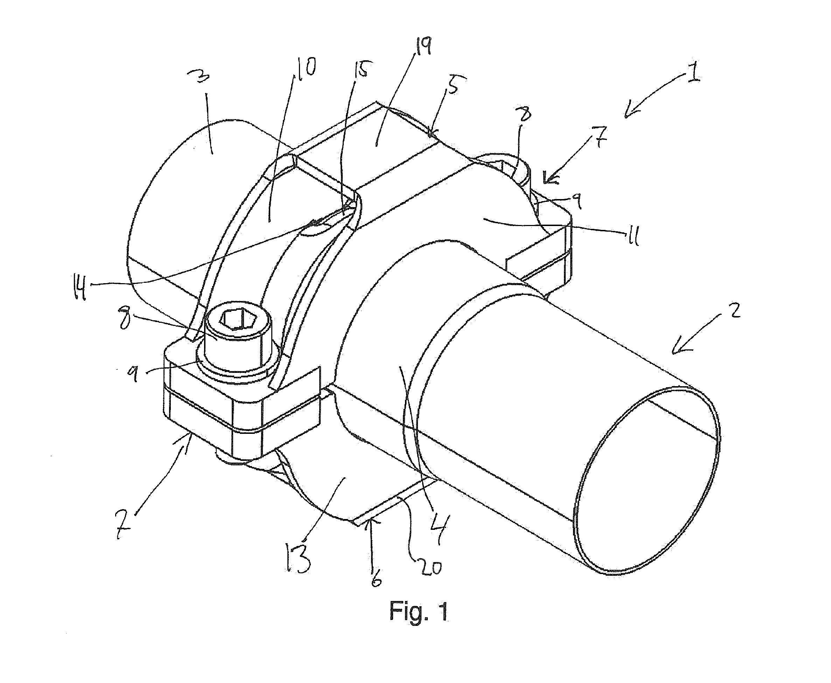

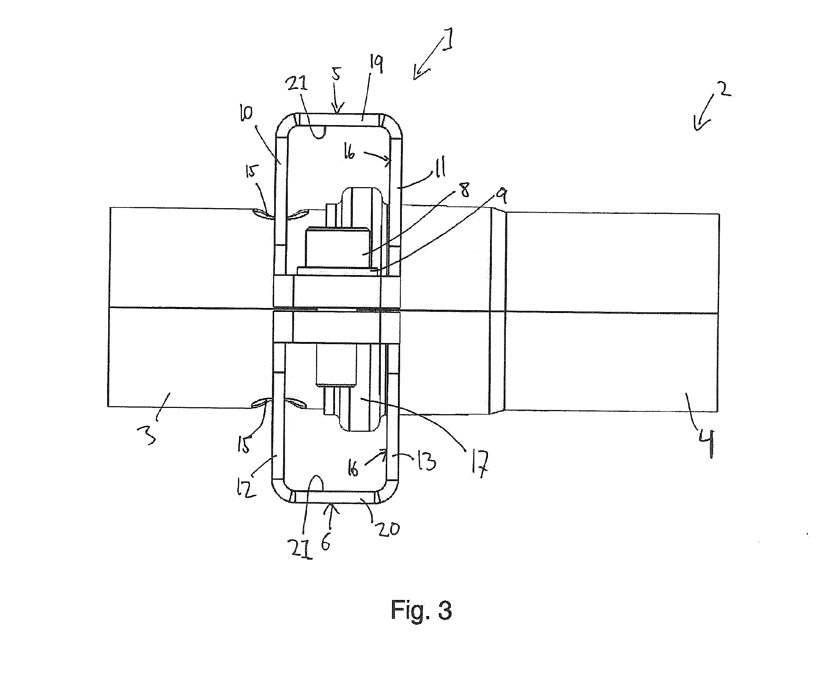

Fig. 1 shows the lock fitting 1 mounted on a pipe 2 where the pipe has a spigot end 3 and a socket end 4. The lock fitting 1 comprises a first bracket 5 and a second bracket 6. The brackets include locking means 7. In the shown embodiment, the lock means 7 include screws 8 and washers 9. The first bracket 5 includes a connecting plate 19 and a first leg 10 and a second leg 11 formed integrally with the connecting plate 19. The second bracket 6 includes a connecting plate 20 and a third leg (not visible) and a fourth leg 13 formed integrally with the connecting plate 20. The first leg 10 includes a tooth 14 in an impression 15 in the spigot end 3 of the pipe. It appears that the two connecting plates 19, 20 are disposed spaced apart from the outer surface of the socket end 4 such that there is ample space for a packing groove 17 (see Fig. 3) inside the assembled locking bracket.

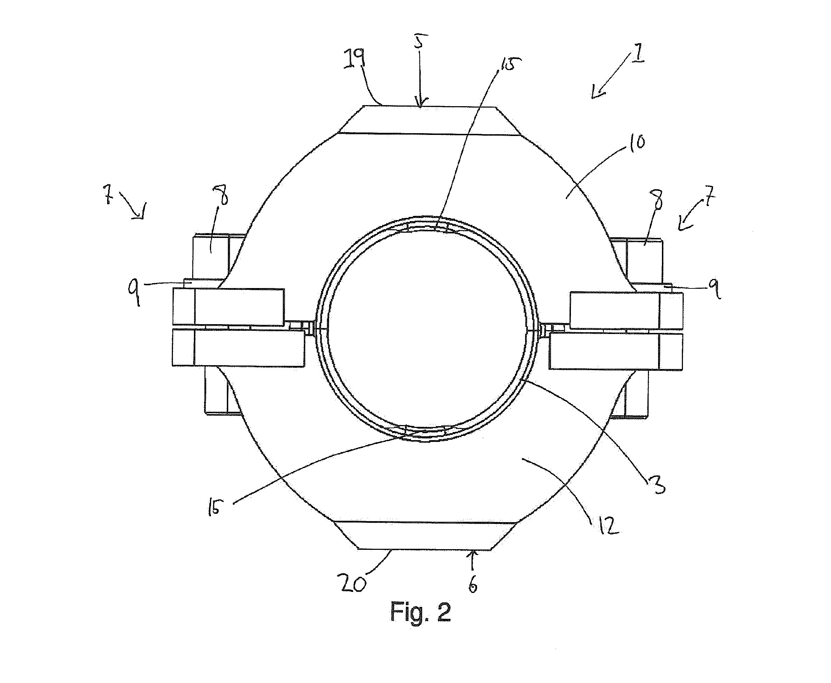

Fig. 2 shows the lock fitting 1 as seen from the spigot end 3 of the pipe. In this embodiment, the first leg 10 and the third leg 12 each have a tooth (not visible). The spigot end of the pipe has two impressions 15, one for each tooth (not visible).

Fig. 3 shows the lock fitting 1 seen from the side of the pipe 2 for illustrating the joint between the socket end 4 and the spigot end 5. In this embodiment, the second leg 11 and the fourth leg 13 include a contact surface 16 for bearing on the packing groove 17 at the socket end 4 of the pipe 2. The first leg 10 and the third leg 12 each include a tooth (not visible). The spigot end of the pipe has two impressions 15, one for each tooth (not visible). It appears that the inner surface 21 of the joining parts 19, 20 are provided with spacing 22 above an outer surface 23 on the packing groove such that there is ample space for the packing groove inside the assembled lock fitting.

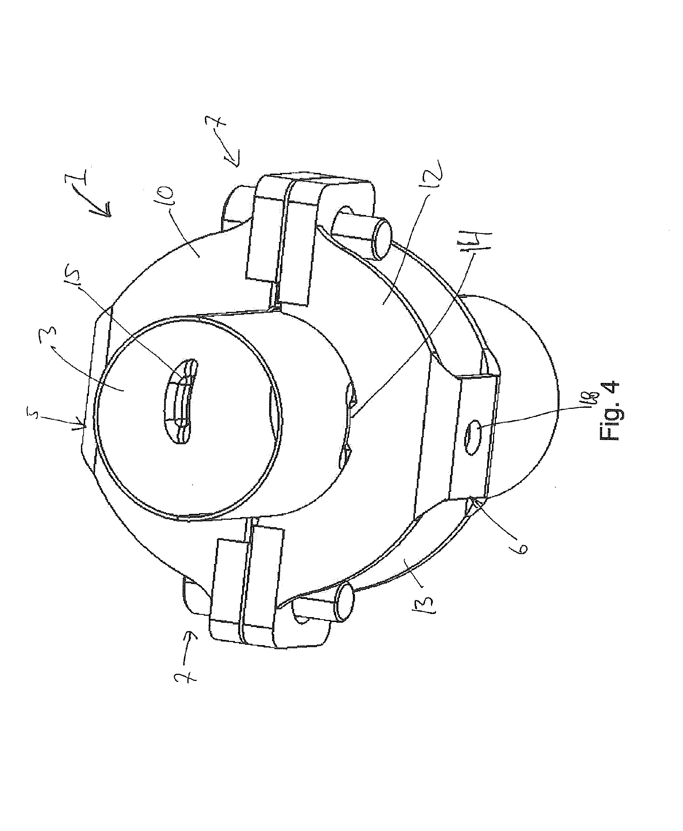

Fig. 4 shows the lock fitting 1 as seen from below towards the spigot end 3 of the pipe. In this embodiment, the second bracket 6 includes a hole 18 for receiving fastening or spacer means (not shown).

## Claims

1. A lock fitting for securing a joint between a first and a second thin-walled metal pipe, where the lock fitting includes a first bracket and a second bracket, where the first bracket includes a first leg and a second leg and a first locking means, where the second bracket includes a third leg and a fourth leg and a second locking means for joining to the first locking means, where the legs, when the two brackets have been joined, form a first and a second recess for receiving pipe ends, and where at least one leg includes at least one tooth which is directed inwardly into at least one of the circular recesses, **characterised in that** the first and third legs interact and form a first circular recess for receiving a spigot end of a pipe, that the second and fourth legs interact and form a second and greater circular recess for receiving a socket end of a pipe, and that the at least one tooth is directed inwardly into the first circular recess for pressing into the spigot end of the metal pipe when the brackets are joined.

2. Lock fitting according to claim 1, **characterised in that** the two pairs of interacting legs are spaced apart and that at least one pair of interacting legs have a lateral surface facing the other pair of interacting legs, and which are adapted for bearing against an outwardly protruding bead, for example in the form of a packing groove, on the pipe.

3. Lock fitting according to claim 1 or 2, **characterised in that** the first leg and the third leg include at least one tooth adapted for pressing into the spigot end of the pipe.

4. Lock fitting according to any of claims 1-3, **characterised in that** the second leg and the fourth leg have a lateral surface which is adapted for bearing against an outwardly protruding bead on the pipe.

5. Lock fitting according to any of claims 1-4, **characterised in that** the first bracket and the second bracket are pivotably interconnected via a hinge connection.

6. Lock fitting according to any of claims 1-5, **characterised in that** one or the other bracket includes a hole.

7. A method for securing a joint between a first and a second thin-walled metal pipe, where the lock fitting is inserted around the spigot-and-socket joint, where the first bracket of the lock fitting is joined to the second bracket of the lock fitting by joining a first locking means on the first bracket and a second locking means on the second bracket, where the first bracket includes a first leg and a second leg, where the second bracket includes a third leg and a fourth leg, where the legs, when the two brackets are joined, form a first and a second recess for receiving pipe ends, and where at least one leg includes at least one tooth which is directed inwardly into at least one of the circular recesses, **characterised in that** the first and third legs form a first circular recess for receiving a spigot end of a pipe, that the second and fourth legs form a second and larger circular recess for receiving a socket end of a pipe, and that the at least one tooth which is directed inwardly into the first circular recess is pressed into the spigot end of the metal pipe during the joining of the two brackets.

8. Method according to claim 7, **characterised in that** the second and fourth legs are disposed with a lateral surface facing the first and third legs in contact with an outwardly projecting bead on the pipe, for example formed by a packing groove, during joining.

9. Use of a lock fitting according to any of claims 1 -6 for securing a spigot-and-socket joint.

10. Use of a lock fitting according to any of claims 1 -6 for securing a spigot-and-socket joint by the method according to claim 7 or 8.
